# EUROPEAN PATENT APPLICATION

(11) **EP 4 700 887 A1**
(43) Date of publication of application: **25.02.2026**
(21) Application number: 25188138.9
(22) Date of filing: 08.07.2025
(51) Int. Cl.: H01M 10/0562, H01M 10/0565, H01M 10/653, H01M 50/103, H01M 50/474, H01M 50/489, H01M 50/593

(54) **BATTERY**

(30) Priority: 22.08.2024 JP 2024141153
(71) Applicant: TOYOTA JIDOSHA KABUSHIKI KAISHA, Toyota-shi, Aichi-ken 471-8571 (JP)
(72) Inventor: KAKISHITA, Kenichi, Toyota-shi, Aichi-ken, 471-8571 (JP); KAGAMI, Ryo, Toyota-shi, Aichi-ken, 471-8571 (JP); NAGASE, Hiroshi, Toyota-shi, Aichi-ken, 471-8571 (JP)
(74) Representative: Winter, Brandl - Partnerschaft mbB

(57) **Abstract**

A battery (20, 40, 50, 60) includes: an electrode body (24) configured by layering a positive electrode current collector, a positive electrode active material, a solid electrolyte, a negative electrode active material, and a negative electrode current collector; a case (22) housing the electrode body; and an insulating resin layer (26, 42, 52, 62) provided in a gap between the electrode body (24) and the case (22), wherein the insulating resin layer (26, 42, 52, 62) is provided in a gap between the case and an end face of the electrode body (24) extending in a longitudinal direction, and, in addition, a thin portion (26A, 42A, 52A, 62A) having a smaller thickness contacting the electrode body (24) than at a central portion of the insulating resin layer is formed at at least one end part of the insulating resin layer (26, 42, 52, 62).

## Description

### BACKGROUND

### Technical Field

The present disclosure relates to a battery.

### Related Art

Japanese Patent Application Laid-Open (JP-A) No. H5-074424 discloses a secondary battery in which an electrode body is accommodated in an outer can. In the secondary battery disclosed in JP-A No. H5-074424, the electrode body is formed into an elliptical shape, and an insulating plate is attached to a bottom part of the electrode body, thereby providing insulation between the electrode body and the outer can.

However, in a structure in which an insulating plate is arranged all the way to the corners of an outer can to ensure insulation, such as the structure disclosed in JP-A No. H5-074424, in a case in which the outer can is deformed owing to the application of an external force or the like, stress is concentrated at edge parts of the insulating plate, and there is a possibility that the insulating plate will peel off.

### SUMMARY

In consideration of the circumstances described above, the present disclosure aims to obtain a battery capable of maintaining favorable insulation properties.

A battery of a first aspect includes: an electrode body configured by layering a positive electrode current collector, a positive electrode active material, a solid electrolyte, a negative electrode active material, and a negative electrode current collector; a case housing the electrode body; and an insulating resin layer provided in a gap between the electrode body and the case, in which the insulating resin layer is provided in a gap between the case and an end face of the electrode body extending in a longitudinal direction, and, in addition, a thin portion having a smaller thickness contacting the electrode body than at a central portion of the insulating resin layer is formed at at least one end part of the insulating resin layer.

In the battery of the first aspect, an electrode body is housed in a case, and the electrode body is configured by layering a positive electrode current collector, a positive electrode active material, a solid electrolyte, a negative electrode active material, and a negative electrode current collector. In addition, an insulating resin layer is provided in a gap between the electrode body and the case. In this manner, by interposing an insulating resin layer between the electrode body and the case, the electrode body and the case are insulated from each other.

Here, the insulating resin layer is provided in a gap between the case and an end face extending in the longitudinal direction of the electrode body. Further, a thin portion that has a smaller thickness contacting the electrode body than a central portion is formed at at least one end part of the insulating resin layer. In this way, by forming a thin portion at the end part of the insulating resin layer, it is possible to suppress peeling of the insulating resin layer from the case or the electrode body even in a case in which an external force is applied to the case.

A battery according to a second aspect is the battery of the first aspect, in which the insulating resin layer contains a thermally conductive filler.

In the battery according to the second aspect, the insulating resin layer contains a thermally conductive filler, and therefore, the insulating resin layer has thermal conductivity. As a result of this, heat from the electrode body can be released from the case to the outside via the insulating resin layer. In other words, the cooling performance of the electrode body can be improved.

A battery according to a third aspect is the battery of the first aspect, in which: a positive electrode tab, at which positive electrode foils extending from the positive electrode current collector are gathered, is provided at one end part in the longitudinal direction of the electrode body, and the thin portion is formed at least at the end part of the insulating resin layer at a side of the positive electrode tab.

In the battery according to the third aspect, the thin portion of the insulating resin layer is formed at least at the end part at the side of the positive electrode tab. As a result of this, favorable insulation properties can be maintained even in an environment in which an external force is applied to the positive electrode tab side of the case.

A battery according to a fourth aspect is the battery of the first aspect, in which: a negative electrode tab, at which negative electrode foils extending from the negative electrode current collector are gathered, is provided at another end part in the longitudinal direction of the electrode body, and the thin portion is formed at least at the end part of the insulating resin layer at a side of the negative electrode tab.

In the battery according to the fourth aspect, the thin portion of the insulating resin layer is formed at least at the end part at the side of the negative electrode tab. As a result of this, favorable insulation properties can be maintained even in an environment in which an external force is applied to the negative electrode tab side of the case.

A battery according to a fifth aspect is the battery of the first aspect, in which the thin portion is shaped to gradually decrease in thickness from the central portion to the end part of the insulating resin layer.

In the battery according to the fifth aspect, since the thin portion has a shape in which the thickness of the insulating resin layer is gradually reduced, it is possible to suppress concentration of stress at one portion of the insulating resin layer.

A battery according to a sixth aspect is the battery of the first aspect, in which the thin portion has a recessed shape at a central portion in a thickness direction of the insulating resin layer.

In the battery according to the sixth aspect, a central portion in the thickness direction of the insulating resin layer is recessed to form a thin portion. As a result of this, when an external force is applied, a part of the external force can be absorbed by the recessed central portion.

A battery according to a seventh aspect is the battery of the first aspect, in which the thin portion is formed at both of the one end part and another end part of the insulating resin layer.

In the battery according to the seventh aspect, since the thin portion is formed at both ends of the insulating resin layer, peeling of the insulating resin layer can be suppressed even when an external force is applied from any direction.

A battery according to an eighth aspect is the battery any one of the first to seventh aspects, in which the insulating resin layer is provided at both sides in a transverse direction of the electrode body, and the thin portion is formed at only one of the insulating resin layers.

In the battery according to the eighth aspect, since the insulating resin layer is provided at both sides of the electrode body in the transverse direction, the electrode body and the case are insulated from each other at both sides of the electrode body in the transverse direction. Moreover, the thin portion is formed only at one of the insulating resin layers. As a result of this, by disposing the insulating resin layer having the thin portion on the side of the case at which an external force is likely to act, peeling of the insulating resin layer can be effectively suppressed. Further, by not forming a thin portion at the insulating resin layer on the side at which an external force is less likely to act, the insulating properties can be improved.

As described above, the battery according to the present disclosure can maintain favorable insulation properties.

### BRIEF DESCRIPTION OF THE DRAWINGS

An exemplary embodiment of the present disclosure will be described in detail based on the following figures, wherein:
Fig. 1 is a schematic plan view showing the relevant portions of a vehicle to which a battery according to an embodiment is applied;
Fig. 2 is a schematic perspective view of a battery module;
Fig. 3 is a schematic cross-sectional view of a battery cell according to an embodiment, as viewed from the thickness direction;
Fig. 4 is a schematic cross-sectional view of a battery cell according to a first modified example, as viewed from the thickness direction;
Fig. 5 is a schematic cross-sectional view of a battery cell according to a second modified example, as viewed from the thickness direction; and
Fig. 6 is a schematic enlarged cross-sectional view enlarging the relevant portions of a battery cell according to a third modified example, as viewed from the thickness direction.

### DETAILED DESCRIPTION

### (Overall configuration of vehicle 100)

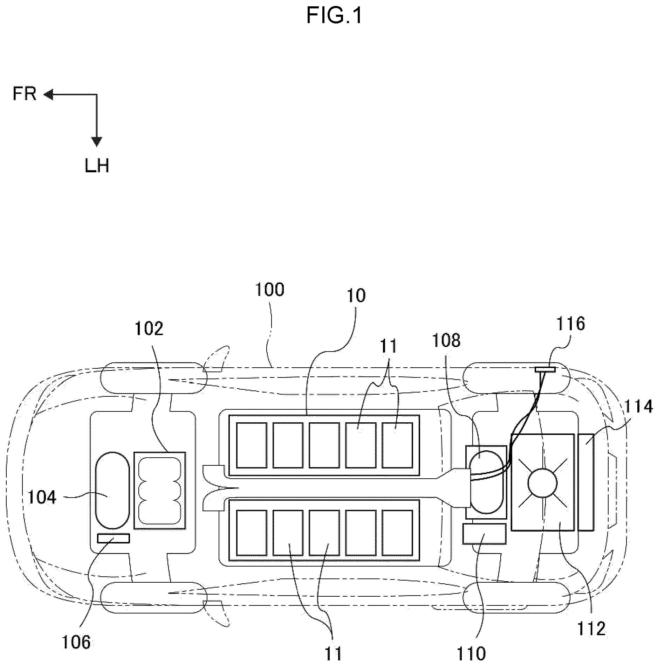

Fig. 1 is a schematic plan view showing the relevant portions of a vehicle 100 to which a battery pack 10 according to the present embodiment is applied. As shown in Fig. 1, a vehicle 100 is a battery electric vehicle (BEV) having a battery pack 10 installed under the floor. In addition, the arrows UP, FR, and LH in the respective drawings indicate the upper side in the vertical direction of the vehicle, the front side in the front-rear direction of the vehicle, and the left side in the width direction of the vehicle, respectively. In cases in which front-rear, left-right, or vertical directions are used in the following explanation, unless specifically stated otherwise, these refer respectively to front-rear directions of the vehicle, left-right directions in a vehicle width direction, and vertical directions of the vehicle.

In the vehicle 100 of the present embodiment, as an example, a DC/DC converter 102, an electric compressor 104, and a positive temperature coefficient (PTC) heater 106 are arranged at the front side of the vehicle relative to the battery pack 10. Further, a motor 108, a gear box 110, an inverter 112 and a charger 114 are arranged at the rear side of the vehicle relative to the battery pack 10.

Direct current output from the battery pack 10 has its voltage adjusted by the DC/DC converter 102, and is then supplied to the electric compressor 104, PTC heater 106, inverter 112, and the like. Further, as a result of supplying electric power to the motor 108 via the inverter 112, the rear wheels rotate and the vehicle 100 is made to travel.

A charging port 116 is provided at a right side part at the rear of the vehicle 100. By connecting a charging plug of an external charging facility (not shown) to the charging port 116, power can be accumulated in the battery pack 10 via the charger 114.

The arrangement and structure of the respective components configuring the vehicle 100 are not limited to the above-described configuration. For example, the present disclosure may be applied to a hybrid vehicle (HV) equipped with an engine or a plug-in hybrid electric vehicle (PHEV). Further, in the present embodiment, the vehicle is a rear-wheel drive in which the motor 108 is installed at the rear of the vehicle; however, the present invention is not limited to this, and the vehicle may be a front-wheel drive vehicle in which the motor 108 is installed at the front of the vehicle, or a pair of motors 108 may be mounted at the front and rear of the vehicle. Furthermore, the vehicle may be equipped with an in-wheel motor at each wheel.

Here, the battery pack 10 includes plural battery modules 11. In the present embodiment, as an example, ten battery modules 11 are provided. Specifically, five battery modules 11 are arranged on the right side of the vehicle 100 in the front-rear direction of the vehicle, and five battery modules 11 are arranged on the left side of the vehicle 100 in the front-rear direction of the vehicle. Moreover, the battery modules 11 are electrically connected to each other.

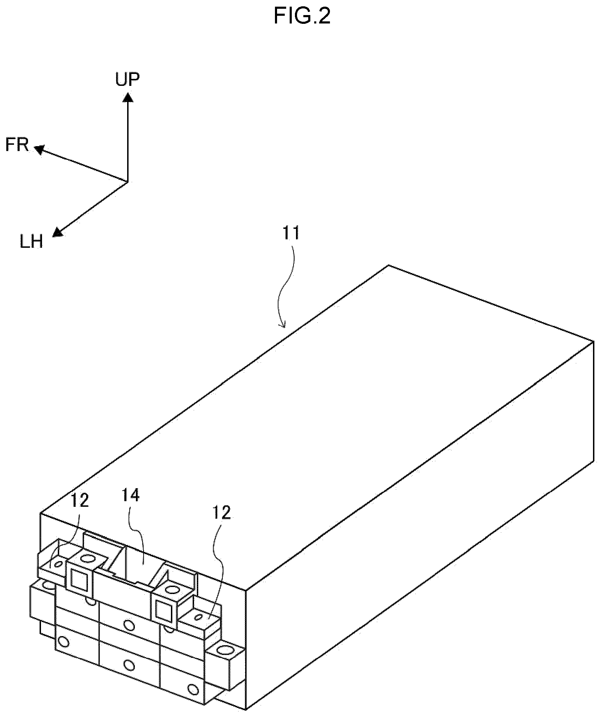

Fig. 2 is a schematic perspective view of the battery module 11. As shown in Fig. 2, the battery module 11 is formed in a substantially rectangular parallelepiped shape with the vehicle width direction as its longitudinal direction. Further, a case of the battery module 11 is formed from an aluminum alloy. For example, the case 13 of the battery module 11 is formed by joining aluminum die castings to both ends of an extruded aluminum alloy material by laser welding or the like.

A pair of voltage terminals 12 and a connector 14 is provided at each of respective end parts of the battery module 11 in the vehicle width direction. Further, bus bars (not shown) are welded to both end parts of the battery module 11 in the vehicle width direction.

Here, plural battery cells serving as batteries are accommodated inside the battery module 11.

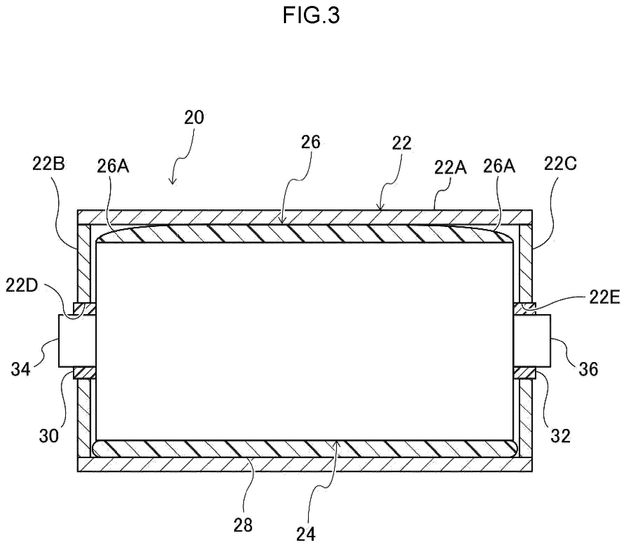

Fig. 3 is a schematic cross-sectional view of a battery cell 20 according to an embodiment, as viewed from the thickness direction. As shown in Fig. 3, the battery cell 20 of the present embodiment includes an outer can 22 as a case, an electrode body 24, and a first insulating resin layer 26 and a second insulating resin layer 28 provided in gaps between the outer can 22 and the electrode body 24.

The outer can 22 configures the outer shell of the battery cell 20 and is formed in a substantially rectangular parallelepiped shape. As an example, the outer can 22 of the present embodiment includes a substantially tubular peripheral wall portion 22A, a positive electrode side cover portion 22B that closes an opening at one side of the peripheral wall portion 22A, and a negative electrode side cover portion 22C that closes an opening at the other side of the peripheral wall portion 22A.

The peripheral wall portion 22A is made of metal and is substantially tubular with both ends open, and is configured at a size that can accommodate the electrode body 24 therein. The positive electrode side cover portion 22B is fixed to the opening at one side of the peripheral wall portion 22A by fitting, welding, or other means, and closes the opening at one side of the peripheral wall portion 22A. Further, an opening 22D is formed in the center of the positive electrode side cover portion 22B, and a substantially frame-shaped positive electrode side insulator 30 is provided in this opening 22D. A positive electrode tab 34, which is described below, is disposed inside the positive electrode side insulator 30.

The negative electrode side cover portion 22C is fixed to the opening at the other side of the peripheral wall portion 22A by fitting, welding, or other means, and closes the opening at the other side of the peripheral wall portion 22A. Further, an opening 22E is formed in the center of the negative electrode side cover portion 22C, and a substantially frame-shaped negative electrode side insulator 32 is provided in this opening 22E. A negative electrode tab 36, which is described below, is disposed inside the negative electrode side insulator 32.

The electrode body 24 housed in the outer can 22 is configured by layering a positive electrode current collector, a positive electrode active material, a solid electrolyte, a negative electrode active material, and a negative electrode current collector. Further, the electrode body 24 has an outer shape corresponding to the outer can 22, and is formed in a substantially rectangular shape having a longitudinal direction and a transverse direction as viewed from the layering direction. Here, in the electrode body 24 of the present embodiment, the layering direction is the depth direction through the paper surface in Fig. 3. Further, the electrode body 24 has its longitudinal direction in the left-right direction of the paper surface and its transverse direction in the vertical direction of the paper surface.

The positive electrode current collector and the negative electrode current collector are formed from a metal foil, and examples of the metal foil include aluminum foil, copper foil, nickel foil, titanium foil, and stainless steel foil. Further, a coating layer may be formed on the surface of the current collector, and the coating layer may be formed by a known method such as plating or spray coating. Here, the positive electrode current collector is preferably aluminum foil, and the negative electrode current collector is preferably copper foil.

The positive electrode active material is not particularly limited, and any conventionally known material can be used as appropriate. For example, examples of the positive electrode active material include LiCoO₂, LiNiO₂, LiMnO₂, LiMn₂O₄, Li(NiCoMn)O₂, Li(NiCoAl)O₂, and LiFePO₄. Here, the positive electrode active material particles may be Hi-Nickel (a positive electrode active material with a high Ni ratio), an Li-Ni-Co-Mn based composite oxide, or a ternary positive electrode active material.

The negative electrode active material may be at least one selected from the group consisting of, for example, natural graphite, artificial graphite, hard carbon (carbon that is difficult to graphitize) or soft carbon (carbon that is easy to graphitize), Si, SiOₓ (0<x<2), Si-based alloys, Sn, SnOₓ (0<x<2), Li, Li-based alloys, and Li₄Ti₅O₁₂. Examples of artificial graphite include highly oriented graphite and mesocarbon microbeads. The negative electrode active material is preferably artificial graphite.

Here, the positive electrode foil extends from an end of the positive electrode current collector to one side, and the positive electrode foils of the plural layered positive electrode current collectors are gathered together to configure the positive electrode tab 34. The positive electrode tab 34 passes through the inside of the positive electrode side insulator 30 and extends to the outside of the outer can 22.

Further, the negative electrode foil extends from an end of the negative electrode current collector to the other side, and the negative electrode foils of the plural layered negative electrode current collectors are gathered together to form the negative electrode tab 36. The negative electrode tab 36 passes through the inside of the negative electrode side insulator 32 and extends to the outside of the outer can 22. In this manner, in the battery cell 20 of the present embodiment, the positive electrode tab 34 is provided at one end in the longitudinal direction of the electrode body 24, and the negative electrode tab 36 is provided at the other end in the longitudinal direction.

A first insulating resin layer 26 and a second insulating resin layer 28 are provided in the gap between the electrode body 24 and the outer can 22.

The first insulating resin layer 26 is provided in the gap between the outer can 22 and an end face at one transverse direction end side of the electrode body 24, and is adhered to at least one of the electrode body 24 or the outer can 22. In other words, the first insulating resin layer 26 is provided in the gap between an end face extending in the longitudinal direction of the electrode body 24 and the outer can 22.

**In the** present embodiment, as an example, the first insulating resin layer 26 is adhered to both the electrode body 24 and the outer can 22. Further, the first insulating resin layer 26 is adhered to the entire end face of one end side in the transverse direction of the electrode body 24, covering the entire end face.

Furthermore, the first insulating resin layer 26 of the present embodiment includes a thermally conductive filler. Therefore, the first insulating resin layer 26 has thermal conductivity. Here, in addition to the thermally conductive filler, the first insulating resin layer 26 contains a known insulating resin having an insulating function. Here, as the thermally conductive filler, a metal, artificial diamond, silicon carbide, or the like is used.

Here, a thin portion is formed at at least one end part of the first insulating resin layer 26. **In** the present embodiment, a thin portion 26A is formed at both one end part and another end part in the longitudinal direction of the first insulating resin layer 26.

The thin portion 26A is formed such that the thickness thereof contacting the electrode body 24 is smaller than that of a central portion of the first insulating resin layer 26. Specifically, the thin portion 26A has a shape in which the thickness gradually decreases from the central portion of the first insulating resin layer 26 toward the end part. Therefore, in the thin portion 26A, the thickness of the first insulating resin layer 26 gradually decreases from a central side toward a side of the end part in the longitudinal direction of the electrode body 24 as viewed from the layering direction of the electrode body 24.

**In** the present embodiment, by forming the thin portion 26A at both ends of the first insulating resin layer 26 as described above, spaces that are not filled with the first insulating resin layer 26 are provided at two corners of the outer can 22.

Further, the second insulating resin layer 28 is provided in the gap between the outer can 22 and an end face at another transverse direction end side of the electrode body 24, and is adhered to at least one of the electrode body 24 or the outer can 22. **In** other words, the second insulating resin layer 28 is provided in the gap between an end face extending in the longitudinal direction of the electrode body 24 and the outer can 22.

**In the** present embodiment, as an example, the second insulating resin layer 28 is adhered to both the electrode body 24 and the outer can 22. Further, the second insulating resin layer 28 is adhered to the entire end face of one end side in the transverse direction of the electrode body 24, covering the entire end face.

Furthermore, the second insulating resin layer 28 of the present embodiment includes a thermally conductive filler, similarly to the first insulating resin layer 26. Here, the first insulating resin layer 26 and the second insulating resin layer 28 may be formed so as to be longer than the electrode body 24.

Here, unlike the first insulating resin layer 26, the second insulating resin layer 28 of the present embodiment does not have a thin portion formed therein. Therefore, the thin portion is formed only in one of the insulating resin layers.

### (Mechanism)

Next, the mechanism of the battery cell 20 according to the present embodiment is explained.

**In** the battery cell 20 according to the present embodiment, an electrode body 24 is housed in an outer can 22, which is a case, and the electrode body 24 is configured by layering a positive electrode current collector, a positive electrode active material, a solid electrolyte, a negative electrode active material, and a negative electrode current collector. Further, a first insulating resin layer 26 and a second insulating resin layer 28 are provided in gaps between the electrode body 24 and the outer can 22. **In** this manner, by interposing an insulating resin layer between the electrode body 24 and the outer can 22, the electrode body 24 and the outer can 22 are insulated from each other.

Here, the first insulating resin layer 26 is provided in the gap between an end face extending in the longitudinal direction of the electrode body 24 and the outer can 22, and a thin portion 26A that has a smaller thickness contacting the electrode body than a central portion is formed at at least one end part of the first insulating resin layer 26. In this manner, by forming the thin portion 26A at the end part of the first insulating resin layer 26, even in a case in which an external force is applied to the outer can 22, the first insulating resin layer 26 can be prevented from peeling off from the outer can 22 or the electrode body 24. As a result, favorable insulation properties can be maintained.

Further, in the present embodiment, since the first insulating resin layer 26 and the second insulating resin layer 28 contain a thermally conductive filler, the first insulating resin layer 26 and the second insulating resin layer 28 have thermal conductivity. As a result of this, heat from the electrode body 24 can be dissipated from the outer can 22 to the outside via the first insulating resin layer 26 and the second insulating resin layer 28. In other words, the cooling performance of the electrode body 24 can be improved.

Furthermore, in the present embodiment, since the thin portion 26A of the first insulating resin layer 26 is formed at an end part at the side of the positive electrode tab 34, even in an environment in which an external force is applied to the positive electrode tab 34 side of the outer can 22, the insulation properties can be favorably maintained. Similarly, a thin portion 26A is also formed at the end part at the side of the negative electrode tab 36. As a result of this, favorable insulation properties can be maintained even in an environment in which an external force is applied to the negative electrode tab 36 side of the outer can 22.

Furthermore, since the thin portion 26A is shaped such that the thickness of the first insulating resin layer 26 is gradually reduced, concentration of stress in one portion of the first insulating resin layer 26 can be suppressed. In particular, in the present embodiment, since the thin portion 26A is formed at both end parts of the first insulating resin layer 26, regardless of the direction from which an external force is applied, stress concentration can be suppressed, and peeling of the first insulating resin layer 26 can be suppressed.

Further, in the present embodiment, since the insulating resin layers (the first insulating resin layer 26 and the second insulating resin layer 28) are provided on both sides of the electrode body 24 in the transverse direction, the electrode body 24 is insulated from the outer can 22 on both sides in the transverse direction of the electrode body 24. In addition, since the thin portion 26A is formed only in the first insulating resin layer 26, by disposing the first insulating resin layer 26 having the thin portion 26A on the side of the outer can 22 at which an external force is likely to act, peeling of the first insulating resin layer 26 can be effectively suppressed. Further, by not forming a thin portion on the second insulating resin layer 28 on the side at which an external force is less likely to act, the insulating properties can be improved.

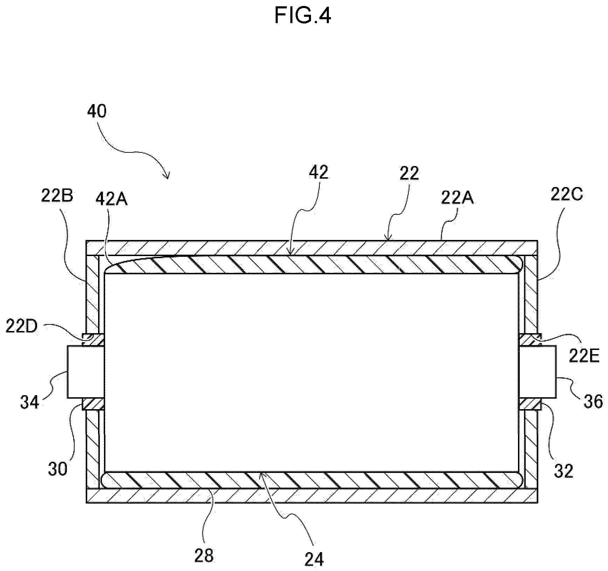

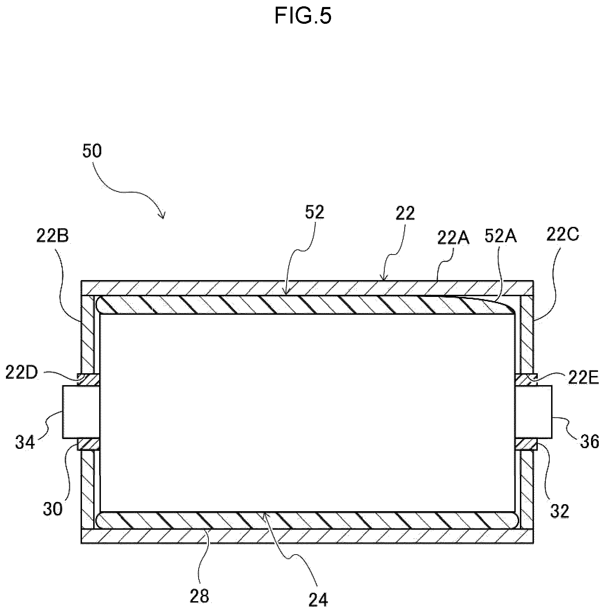

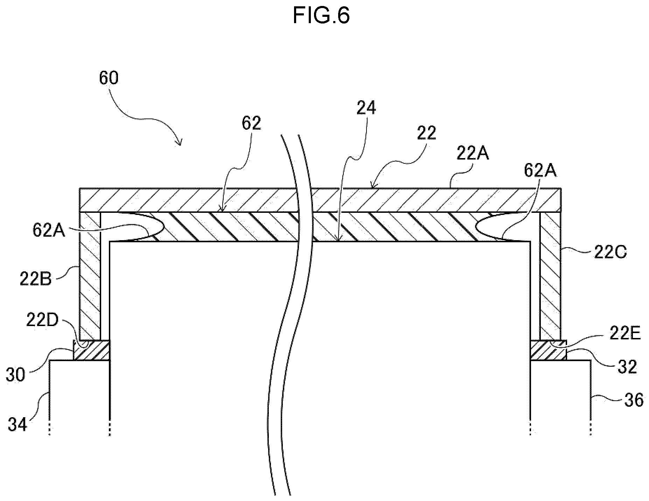

While, in the present embodiment, the first insulating resin layer 26 has the thin portions 26A at both end parts thereof, the thickness of which gradually decreases, the present invention is not limited to this. For example, the structures according to the first modified example shown in Fig. 4, the second modified example shown in Fig. 5, and the third modified example shown in Fig. 6 may be adopted. In the first to third modified examples explained below, the same configurations as in the embodiment are given the same reference numerals, and description thereof is omitted as appropriate.

### (First Modified Example)

Fig. 4 is a schematic cross-sectional view of a battery cell 40 according to a first modified example, as viewed from the thickness direction. As shown in Fig. 4, in this modified example, an electrode body 24 is housed in an outer can 22, and insulating resin layers are provided on both sides of the electrode body 24 in the transverse direction.

Specifically, a first insulating resin layer 42 is provided at one end side in the transverse direction of the electrode body 24 (the upper side on the paper surface), and the second insulating resin layer 28 is provided at the other end side in the transverse direction of the electrode body 24 (the lower side on the paper surface). The second insulating resin layer 28 has the same configuration as in the embodiment.

The first insulating resin layer 42 is provided in a gap between an end face at one end side in the transverse direction of the electrode body 24 and the outer can 22, and is adhered to at least one of the electrode body 24 or the outer can 22. **In** other words, the first insulating resin layer 42 is provided in the gap between an end face extending in the longitudinal direction of the electrode body 24 and the outer can 22.

**In** addition, the first insulating resin layer 42 is adhered to both the electrode body 24 and the outer can 22, and is adhered to the entire end face at the one end side of the electrode body 24 in the transverse direction, covering the entire end face.

Furthermore, the first insulating resin layer 42 includes a thermally conductive filler. Therefore, the first insulating resin layer 42 has thermal conductivity. In addition to the thermally conductive filler, the first insulating resin layer 42 includes a known insulating resin having an insulating function.

Here, in this modified example, a thin portion 42A is formed at one end part of the first insulating resin layer 42. Specifically, a thin portion 42A is formed at the end part of the first insulating resin layer 42 at the side of the positive electrode tab 34. Further, the configuration differs from the embodiment in that no thin portion is formed at the other end part of the first insulating resin layer 42.

In the battery cell 40 according to this modified example, a thin portion 42A is formed at the end part of the first insulating resin layer 42 at the side of the positive electrode tab 34. As a result of this, favorable insulation properties can be maintained even in an environment in which an external force is applied to the positive electrode tab 34 side of the outer can 22.

In addition, in a case in which the amount of heat generated differs between the positive electrode side and the negative electrode side of the electrode body 24-in particular, when the amount of heat generated on the positive electrode side is large-by forming the thin portion 42A on the positive electrode side, the amount of heat discharged at the positive electrode side is reduced compared to a case in which the thin portion 42A is not formed. As a result, the amount of heat discharged from the outer can 22 at the positive electrode side and at the negative electrode side can be balanced.

### (Second Modified Example)

Fig. 5 is a schematic cross-sectional view of a battery cell 50 according to a second modified example, as viewed from the thickness direction. As shown in Fig. 5, in this modified example, an electrode assembly 24 is housed in an outer can 22, and an insulating resin layer is provided at both sides of the electrode body 24 in the transverse direction.

Specifically, a first insulating resin layer 52 is provided at one end side in the transverse direction of the electrode body 24 (the upper side on the paper surface), and the second insulating resin layer 28 is provided at the other end side in the transverse direction of the electrode body 24 (the lower side on the paper surface). The second insulating resin layer 28 has the same configuration as in the embodiment.

The first insulating resin layer 52 is provided in a gap between an end face at one end side in the transverse direction of the electrode body 24 and the outer can 22, and is adhered to at least one of the electrode body 24 or the outer can 22. In other words, the first insulating resin layer 52 is provided in the gap between an end face extending in the longitudinal direction of the electrode body 24 and the outer can 22.

In addition, the first insulating resin layer 52 is adhered to both the electrode body 24 and the outer can 22, and is adhered to the entire end face at the one end side of the electrode body 24 in the transverse direction, covering the entire end face.

Furthermore, the first insulating resin layer 52 includes a thermally conductive filler. Therefore, the first insulating resin layer 52 has thermal conductivity. In addition to the thermally conductive filler, the first insulating resin layer 52 includes a known insulating resin having an insulating function.

Here, in this modified example, a thin portion 52A is formed at the other end part of the first insulating resin layer 52. Specifically, a thin portion 52A is formed at the end part of the first insulating resin layer 52 at the side of the negative electrode tab 36. Further, the configuration differs from the embodiment in that no thin portion is formed at the one end part of the first insulating resin layer 52.

In the battery cell 50 according to this modified example, a thin portion 52A is formed at the end part of the first insulating resin layer 52 at the side of the negative electrode tab 36. As a result of this, favorable insulation properties can be maintained even in an environment in which an external force is applied to the negative electrode tab 36 side of the outer can 22.

In addition, in a case in which the amount of heat generated differs between the positive electrode side and the negative electrode side of the electrode body 24-in particular, when the amount of heat generated on the positive electrode side is large-by forming the thin portion 52A at the negative electrode side and not forming the thin portion 52A at the positive electrode side, heat can be actively removed from the positive electrode side which is prone to heat generation, and temperature increase of the electrode body 24 can be suppressed.

### (Third Modified Example)

Fig. 6 is a schematic enlarged cross-sectional view enlarging the relevant portions of a battery cell 60 according to a third modified example, as viewed from the thickness direction. As shown in Fig. 6, in this modified example, an electrode assembly 24 is housed in an outer can 22. Further, as in the battery cell 20 of the embodiment, an insulating resin layer is provided at both sides of the electrode body 24 in the transverse direction.

Specifically, a first insulating resin layer 62 is provided at one end side in the transverse direction of the electrode body 24 (the upper side on the paper surface). The first insulating resin layer 62 is provided in the gap between the outer can 22 and an end face at one transverse direction end side of the electrode body 24, and is adhered to at least one of the electrode body 24 or the outer can 22. In other words, the first insulating resin layer 62 is provided in the gap between an end face extending in the longitudinal direction of the electrode body 24 and the outer can 22. Further, the first insulating resin layer 62 includes a thermally conductive filler.

Here, a thin portion 62A is formed at each of the one end part and the other end part of the first insulating resin layer 62. The thin portion 62A is different from the embodiment in that a central portion in the thickness direction of the first insulating resin layer 62 has a recessed shape.

In the first insulating resin layer 62, the thin portion 62A formed at the side of the positive electrode tab 34 has a shape in which the central portion thereof in the thickness direction of the first insulating resin layer 62 is recessed toward the side of the negative electrode tab 36. In addition, one end of the thin portion 62A in the thickness direction is adhered to an end part of the electrode body 24, and the other end of the thin portion 62A in the thickness direction is adhered to the outer can 22.

In the first insulating resin layer 62, the thin portion 62A formed at the side of the negative electrode tab 36 has a shape in which the central portion thereof in the thickness direction of the first insulating resin layer 62 is recessed toward the side of the positive electrode tab 34. In addition, one end of the thin portion 62A in the thickness direction is adhered to an end part of the electrode body 24, and the other end of the thin portion 62A in the thickness direction is adhered to the outer can 22.

In the battery cell 60 according to this modified example, a central portion in the thickness direction of the first insulating resin layer 62 is recessed to form a thin portion 62A. As a result of this, when an external force is applied, a part of the external force can be absorbed by the recessed central portion.

While the battery cells 20, 40, 50, and 60 according to the embodiment and the modified examples have been explained above, there is no limitation to this, and the present disclosure can, of course, be embodied in various forms within a range that does not depart from the gist of the present disclosure. For example, in the embodiment described above, a structure in which a plurality of battery cells 20 are housed in the battery module 11 shown in Fig. 2 has been described. However, there is no limitation to this, and a structure in which the battery cells 20 are directly mounted at the vehicle body may be adopted.

Further, in the embodiment described above, as shown in Fig. 3, the thin portion 26A is formed only in the first insulating resin layer 26 disposed at one side in the transverse direction of the electrode body 24; however, there is no limitation to this. For example, a thin portion may be formed in the second insulating resin layer 28 disposed at the other side of the electrode body 24 in the transverse direction.

Furthermore, a configuration may be adopted in which the second insulating resin layer 28 is not provided. In such a case, an insulating member may be disposed between the electrode body 24 and the outer can 22 instead of the second insulating resin layer 28.

Furthermore, in the embodiment described above, the first insulating resin layer 26 and the second insulating resin layer 28 are configured to contain a thermally conductive filler; however, there is no limitation to this, and the configuration may be such that the thermally conductive filler is not included. However, in terms of improving the cooling performance of the electrode body 24, it is preferable to use an insulating resin layer containing a thermally conductive filler.

The following supplementary notes are disclosed regarding the embodiment described above.

### (Supplementary Note 1)

A battery, including:
an electrode body configured by layering a positive electrode current collector, a positive electrode active material, a solid electrolyte, a negative electrode active material, and a negative electrode current collector;
a case housing the electrode body; and
an insulating resin layer provided in a gap between the electrode body and the case,
in which the insulating resin layer is provided in a gap between the case and an end face of the electrode body extending in a longitudinal direction, and, in addition, a thin portion having a smaller thickness contacting the electrode body than at a central portion of the insulating resin layer is formed at at least one end part of the insulating resin layer.

### (Supplementary Note 2)

The battery of supplementary note 1, in which the insulating resin layer includes a thermally conductive filler.

### (Supplementary Note 3)

The battery of supplementary note 1 or 2, in which:
a positive electrode tab, at which positive electrode foils extending from the positive electrode current collector are gathered, is provided at one end part in the longitudinal direction of the electrode body, and
the thin portion is formed at least at the end part of the insulating resin layer at a side of the positive electrode tab.

### (Supplementary Note 4)

The battery of supplementary note 1 or 2, wherein:
a negative electrode tab, at which negative electrode foils extending from the negative electrode current collector are gathered, is provided at another end part in the longitudinal direction of the electrode body, and
the thin portion is formed at least at the end part of the insulating resin layer at a side of the negative electrode tab.

### (Supplementary Note 5)

The battery of supplementary note 1, in which the thin portion is shaped to gradually decrease in thickness from the central portion to the end part of the insulating resin layer.

### (Supplementary Note 6)

The battery of any one of supplementary notes 1 to 4, in which the thin portion has a recessed shape at a central portion in a thickness direction of the insulating resin layer.

### (Supplementary Note 7)

The battery of any one of supplementary notes 1 to 6, in which the thin portion is formed at both of the one end part and another end part of the insulating resin layer.

### (Supplementary Note 8)

The battery of any one of supplementary notes 1 to 7, in which:
the insulating resin layer is provided at both sides in a transverse direction of the electrode body, and
the thin portion is formed at only one of the insulating resin layers.

## Claims

1. A battery (20, 40, 50, 60), comprising:
an electrode body (24) configured by layering a positive electrode current collector, a positive electrode active material, a solid electrolyte, a negative electrode active material, and a negative electrode current collector;
a case (22) housing the electrode body; and
an insulating resin layer (26, 42, 52, 62) provided in a gap between the electrode body (24) and the case (22),
wherein the insulating resin layer (26, 42, 52, 62) is provided in a gap between the case and an end face of the electrode body (24) extending in a longitudinal direction, and, in addition, a thin portion (26A, 42A, 52A, 62A) having a smaller thickness contacting the electrode body (24) than at a central portion of the insulating resin layer is formed at at least one end part of the insulating resin layer (26, 42, 52, 62).

2. The battery (20, 40, 50, 60) of claim 1, wherein the insulating resin layer (26, 42, 52, 62) includes a thermally conductive filler.

3. The battery (20, 40, 60) of claim 1, wherein:
a positive electrode tab (34), at which positive electrode foils extending from the positive electrode current collector are gathered, is provided at one end part in the longitudinal direction of the electrode body (24), and
the thin portion (26A, 42A, 62A) is formed at least at the end part of the insulating resin layer (26, 42, 62) at a side of the positive electrode tab (34).

4. The battery (50) of claim 1, wherein:
a negative electrode tab (36), at which negative electrode foils extending from the negative electrode current collector are gathered, is provided at another end part in the longitudinal direction of the electrode body (24), and
the thin portion (52A) is formed at least at the end part of the insulating resin layer (52) at a side of the negative electrode tab (36).

5. The battery (20, 40, 50) of claim 1, wherein the thin portion (26A, 42A, 52A) is shaped to gradually decrease in thickness from the central portion to the end part of the insulating resin layer (26, 42, 52).

6. The battery (60) of claim 1, wherein the thin portion (62A) has a recessed shape at a central portion in a thickness direction of the insulating resin layer (62).

7. The battery (20, 60) of claim 1, wherein the thin portion (26A, 62A) is formed at both of the one end part and another end part of the insulating resin layer (26, 62).

8. The battery (20, 40, 50, 60) of claim 1, wherein:
the insulating resin layer (26, 28, 42, 52, 62) is provided at both sides in a transverse direction of the electrode body (24), and
the thin portion (26A, 42A, 52A, 62A) is formed at only one of the insulating resin layers (26, 42, 52, 62).
